# EUROPÄISCHE PATENTANMELDUNG

(11) **EP 1 112 878 A2**
(43) Veröffentlichungstag der Anmeldung: **04.07.2001**
(21) Anmeldenummer: 00127742.5
(22) Anmeldetag: 19.12.2000
(51) Int. Cl.: B60J 7/12

(54) **Zwischen einer Schliessstellung und einer Ablagestellung verstellbares Fahrzeugdach**

(30) Priorität: 29.12.1999 DE 19963640
(71) Anmelder: CTS Fahrzeug-Dachsysteme GmbH, 21079 Hamburg (DE)
(72) Erfinder: Fischer, Thomas, 72074 Tübingen (DE)
(74) Vertreter: Müller, Gottfried

(57) **Zusammenfassung**

Ein verstellbares Fahrzeugdach weist ein zwischen einer Schließstellung und einer Ablagestellung verstellbares Faltverdeck mit einem Verdeckgestänge und einem Verdeck-Bezugstoff auf. Zumindest ein dem Verdeckgestänge zugeordnetes Gestängeteil ist in Ablagestellung mittels einer Verstellkinematik in einen Ablageraum versenkbar.

In einer raumsparenden Ausführung wird dieses Gestängeteil bei der Überführung in der Ablageraum auf einer teilkreisförmigen Bahn bewegt.

## Beschreibung

Die Erfindung betrifft ein zwischen einer Schließstellung und einer Ablagestellung verstellbares Fahrzeugdach nach dem Oberbegriff des Anspruches 1.

Aus der Druckschrift DE 41 23 516 C1 ist ein Fahrzeugdach bekannt, das ein Faltverdeck mit einem verstellbaren Verdeckgestänge und einem vom Verdeckgestänge betragenen Bezugstoff aufweist, der in Schließstellung des Verdecks von einem Stoffhaltebügel gespannt wird, welcher Teil des Verdeckgestänges ist und im hinteren Bereich des Verdeckgestänges angeordnet ist. Der Stoffhaltebügel setzt den Bezugstoff unter Spannung und erzeugt eine glatte Außenfläche, wodurch der Windwiderstand und Windgeräusche reduziert werden. In Schließstellung liegt der Stoffhaltebügel auf einem Deckel auf, welcher einen Ablageraum abdeckt, in welchem das Faltdach in Ablagestellung verstaut wird.

Damit das Faltverdeck in Ablagestellung überführt werden kann, ist es erforderlich, dass der Stoffhaltebügel zunächst aufschwenkt, um Raum für die Öffnungsbewegung des Verdeckkastendeckels zu schaffen. Nach dem Öffnen des Deckels ist der Ablageraum zugänglich, das Faltverdeck kann in den Ablageraum versenkt werden.

Bei der Absenkbewegung in den Ablageraum muss zur Vermeidung von Kollisionen darauf geachtet werden, dass die Verstellkinematik des Faltverdecks außerhalb der Bewegungsbahn des abzulegenden Verdeckgestänges und Bezugstoffes liegt. Dies erfordert eine klein bauende Verstellkinematik, die jedoch gleichzeitig ausreichend groß dimensioniert sein muss, um die für die Verstellbewegung notwendigen Kräfte aufbringen zu können.

Um den Ablageraum so klein wie möglich zu halten, muss außerdem das Verdeck ein kompaktes Ablagemaß aufweisen. Dies stellt insbesondere im Hinblick auf den Stoffhaltebügel, welcher während der Ablagebewegung eine gegenläufige Bewegung zum Verdeck ausführt, hohe Anforderungen im Hinblick auf die Verstellkinematik bei gleichzeitig kleinstmöglicher Ablage.

Aus der gattungsbildenden Druckschrift DE 198 27 796 A1 ist ein verstellbares Fahrzeugdach bekannt, welches ein zwischen einer Schließ- und Ablagestellung verstellbares Faltverdeck mit einem Verdeckgestänge und einem Verdeckbezugstoff aufweist. Der Verdeckbezugstoff wird in Schließstellung des Faltverdecks von einem Stoffhaltebügel gespannt, der auf einem rückwärtigen, karosserieseitigen Bauteil aufliegt. Der Stoffhaltebügel hängt an einem Hauptspriegel des Verdeckgestänges und ist gegenüber diesem verschwenkbar gelagert. Der Hauptspriegel ist an einer Konsole an der Fahrzeugkarosserie drehbar gehalten, so dass bei einer Überführung des Faltverdecks von Schließ- in Ablagestellung der Lagerpunkt des Stoffhaltebügels am Hauptspriegel eine teilkreisförmige Bewegung in Richtung des Ablageraumes ausführt.

Um sicherzustellen, dass der Stoffhaltebügel in Schließstellung eine ausreichend hohe, den Faltverdeck-Bezugstoff straffende Spannkraft aufbringt, ohne vom rückwärtigen Karosserieteil abzuheben, muss der Stoffhaltebügel in dieser Position verriegelt werden oder von einem Stellglied mit einer Haltekraft beaufschlagt werden. In jedem Fall ist ein zusätzliches Bauteil erforderlich, welches zusätzlich zur Verstellkinematik betätigt werden muss.

Der Erfindung liegt das Problem zu Grunde mit einfachen Mitteln ein verstellbares Fahrzeugdach mit einem kompakten Ablagemaß zu schaffen.

Dieses Problem wird erfindungsgemäß mit den Merkmalen des Anspruches 1 gelöst.

Gemäß der Neuerung ist vorgesehen, dass zumindest ein Bauteil des Verdeckgestänges des Fahrzeugdaches bei der Überführung in den Ablageraum hinein eine teilkreisförmige Bewegung ausführt. Die teilkreisförmige Bewegung bietet im Unterschied zu einer Drehbewegung um eine fahrzeugfeste Schwenkachse den Vorteil, dass das Gestängeteil über seine gesamte Länge in Richtung des Bodens des Ablageraumes verschwenkt wird und auf diesem abgesetzt werden kann, wodurch in Ablagestellung nicht nutzbare Bereiche im Ablageraum vermieden werden. Darüber hinaus hat die teilkreisförmige Bewegung den Vorteil, dass während der Absenkung in den Ablageraum das Gestängeteil eine bezogen auf ein fahrzeugfestes Koordinatensystem vermischte translatorische und rotatorische Überführungsbewegung ausführt, wobei die translatorische Komponente der Bewegung das Gestängeteil im ersten Abschnitt der Überführungsbewegung zunächst vom benachbarten Wandabschnitt des Ablageraumes wegführt und im zweiten Abschnitt der Überführungsbewegung der Ablagewand wieder annähert. Dadurch ist es möglich, eine ortsfest angeordnete Verstellkinematik, Lagerungen oder ähnliche Bauteile während der Überführung in Ablagestellung zu übergreifen, Kollisionen während der Ablagebewegung werden vermieden.

Bei dem die kreisförmige Bewegung ausführenden Bauteil handelt es sich um den Stoffhaltebügel, der im rückwärtigen Bereich des Verdeckgestänges angeordnet ist und in Schließstellung des Verdecks vorteilhaft auf dem Verdeckkastendeckel des Ablageraumes aufliegt. Da der Stoffhaltebügel üblicherweise dasjenige Bauteil des Verdeckgestänges ist, welches sich in Schließstellung am weitesten über den rückwärtigen Fahrzeugbereich erstreckt, bietet die Überführung in den Ablageraum auf einer teilkreisförmigen Bewegung den Vorteil einer optimalen Raumausnutzung im Ablageraum.

Es kann gegebenenfalls auch zweckmäßig sein, alternativ oder zusätzlich zum Stoffhaltebügel weitere Bauteile des Verdeckgestänges auf einer teilkreisförmigen Bahn in den Ablageraum zu versenken. Gegebenenfalls kann auch das gesamte Faltverdeck bei der Überführung von Schließ- in Ablagestellung eine teilkreisförmige Bewegung ausführen.

Die Verstellkinematik, welche dem Bauteil die teilkreisförmige Bewegung aufprägt, ist als Viergelenk-Kinematik ausgebildet und weist eine um eine fahrzeugfeste Drehachse schwenkbar gelagerte Tragplatte auf, an der das zu verschwenkende Bauteil befestigt ist, sowie zwei an der Tragplatte gelenkig angreifende Hebel, über die die Bewegung eingeleitet wird. Die beiden Hebel durchschreiten bei der Überführung von Schließ- in Ablagestellung eine Übertotpunktlage, wodurch sichergestellt ist, dass das zu überführende Gestängeteil sowohl in Schließstellung als auch in Ablagestellung in einer Rastposition verharrt. Um sicherzustellen, dass die Verstellkinematik die Übertotpunktlage überwinden kann, ist zweckmäßig einer der Hebel als Kulissenhebel ausgebildet, dessen eines Ende in einer insbesondere als Langloch ausgebildeten Kulisse geführt ist. Bei Durchschreiten der Übertotpunktlage kann der Kulissenhebel in der Kulisse entlang verfahren, wodurch ein Blockieren vermieden wird.

Die beiden Hebel der Verstellkinematik sind vorteilhaft mit einem verstellbaren Bügel des Fahrzeugdaches verbunden, mit der Folge, dass eine Bewegung des Fahrzeugdaches eine Stellbewegung der Verstellkinematik auslöst. Hierdurch wird eine kinematische Kopplung zwischen der Bewegung des Fahrzeugdaches und der Bewegung des auf der kreisförmigen Bahn bewegten Bauteils erzielt. Es genügt ein gemeinsamer Stellantrieb für das gesamte Fahrzeugdach, wobei die Bewegung des Fahrzeugdaches über die Verstellkinematik in die teilkreisförmige Überführungsbewegung umgesetzt wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines über eine Teilkreisbahn in einen Ablageraum abzusenkenden Stoffhaltebügels eines verstellbaren Fahrzeugdaches,
- Fig. 2: eine perspektivische Ansicht auf eine Verstellkinematik, über die der Stoffhaltebügel in den Ablageraum zu verschwenken ist, dargestellt für die Schließstellung des Fahrzeugdaches,
- Fig. 3: die Verstellkinematik in Schließstellung des Daches, jedoch aus einem anderen Blickwinkel gesehen,
- Fig. 4: die Verstellkinematik in einer Zwischenposition zwischen Schließ- und Ablagestellung des Daches,
- Fig. 5: die Verstellkinematik in einer weiteren, der Ablagestellung angenäherten Position, dargestellt in Übertotpunktlage,
- Fig. 6: die Verstellkinematik in Ablagestellung,
- Fig. 7: die Verstellkinematik in Ablagestellung in einer teilweise freigeschnittenen Ansicht.

Im Folgenden sind gleiche Bauteile in den Figuren mit gleichen Bezugszeichen versehen.

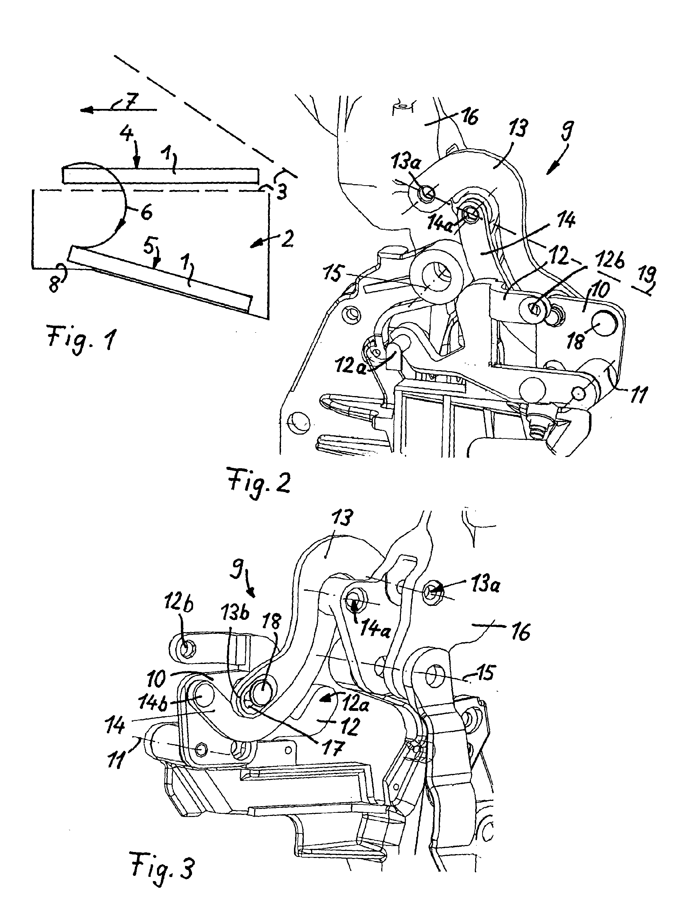

Der schematischen Darstellung gemäß Fig. 1 ist ein Stoffhaltebügel 1, welcher Teil eines zwischen Schließ- und Ablagestellung verstellbaren Fahrzeugdaches ist, zu entnehmen. Der Stoffhaltebügel 1 befindet sich im rückwärtigen Teil des als Faltverdeck ausgebildeten Fahrzeugdaches und spannt in Schließstellung des Daches den von einem Verdeckgestänge des Faltverdecks getragenen Verdeck-Bezugstoff. In der mit Bezugszeichen 4 versehenen Schließstellung ruht der Stoffhaltebügel 1 auf einem von einem Verdeckkastendeckel 3 verschlossenen Ablageraum 2, welcher zur Aufnahme des Faltverdecks in der mit Bezugszeichen 5 dargestellten Ablagestellung vorgesehen ist. Bei der Überführungsbewegung des Faltverdecks von Schließ- in Ablagestellung verschwenkt der Verdeckkastendeckel 3 in eine Offenstellung, um ein Absenken des Faltverdecks in den Ablageraum 2 zu ermöglichen. Nach der Ablage des Faltverdecks wird der Verdeckkastendeckel 3 wieder in seine Abdeckstellung überführt.

Um eine optimale Ausnutzung des Ablageraumes zu gewährleisten und um darüber hinaus sicher zu stellen, dass Bauteile des Fahrzeugdaches oder auch sonstige, fahrzeugfeste Bauteile, welche im Bereich des Ablageraumes 2 auf der der Fahrzeugvorderseite 7 zugewandten Seite angeordnet sind, bei der Überführungsbewegung des Fahrzeugdaches nicht mit der Bewegungsbahn des Stoffhaltebügels 1 kollidieren, wird der Stoffhaltebügel 1 mittels einer in Fig. 1 nicht dargestellten Verstellkinematik auf einer Teilkreisbahn 6 in Pfeilrichtung von der Schließstellung 4 in die Ablagestellung 5 überführt. Während der Überführung von Schließstellung 4 in Ablagestellung 5 auf der Teilkreisbahn 6 bewegt sich der Stoffhaltebügel 1 zusätzlich zur rotatorischen Komponente der Bewegungsbahn 6 zunächst translatorisch entgegen der Fahrzeugvorderseite 7 nach hinten und im weiteren Verlauf wieder zurück in Richtung der Fahrzeugvorderseite 7. Der Stoffhaltebügel 1 bewegt sich hierbei etwa auf einem Halbkreis. In Ablagestellung 5 nimmt der Stoffhaltebügel 1 seine tiefste Position ein, der Stoffhaltebügel 1 liegt auf dem Boden 8 des Ablageraumes 2 auf.

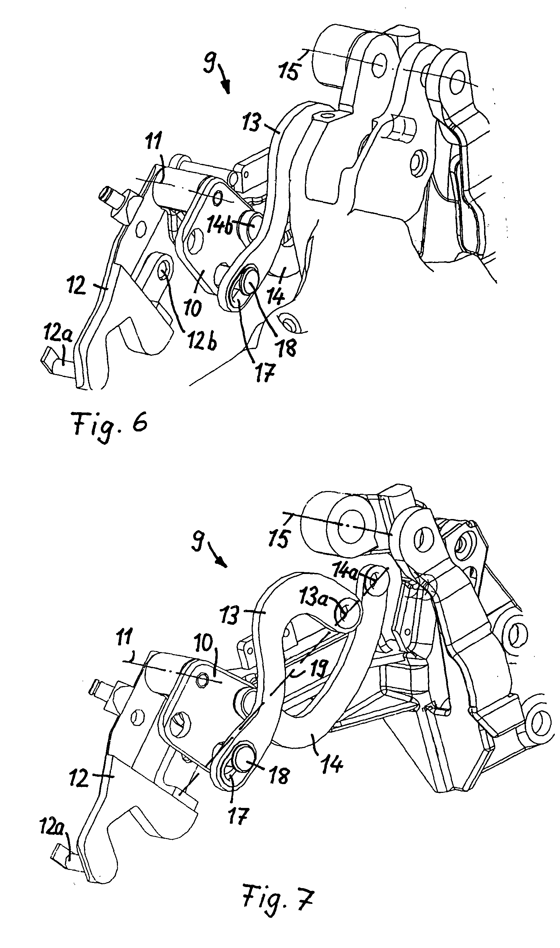

Die Fig. 2 bis 7 zeigen die Verstellkinematik 9, mittels der der Stoffhaltebügel 1 zwischen Schließ- und Ablagestellung auf seiner Teilkreisbahn zu verstellen ist. Die Verstellkinematik 9 ist als Viergelenk-Kinematik ausgeführt und umfasst eine Grundplatte 10, welche um eine fahrzeugfeste Drehachse 11 schwenkbar gelagert ist, sowie zwei Hebel 13 und 14, die schwenkbar mit der Grundplatte 10 verbunden sind und im Bereich ihres der Grundplatte 10 abgewandten Endes über Gelenkpunkte 13a, 14a drehbar mit einem als Dachrahmen 16 ausgebildeten Bauteil des Faltverdecks gekoppelt sind. Der Dachrahmen 16 weist eine fahrzeugfeste Drehachse 15 auf, die Bewegung des Dachrahmens 16 bei der Überführung zwischen Schließ- und Ablagestellung wird über nicht dargestellte Stellelemente vollzogen. Dem Dachrahmen 16 kommt die Funktion eines die Verstellkinematik 9 steuernden Elementes zu, indem bei einer Drehbewegung des Dachrahmens 16 um seine fahrzeugfeste Drehachse 15 auch die Gelenkpunkte 13a und 14a der Hebel 13 bzw. 14 der Verstellkinematik 9 auf einer Kreisbahn um die Drehachse 15 bewegt werden. Die den Hebeln 13, 14 aufgezwungene Bewegung wird auf die Grundplatte 10 übertragen, welche eine Drehbewegung um ihre fahrzeugfeste Drehachse 11 ausübt.

Die Grundplatte 10 trägt einen drehfest mit der Grundplatte 10 verbundenen Verschwenkhebel 12, der im Bereich eines der Grundplatte 10 abgewandten Endes ein Verbindungsglied 12a sowie einen Gelenkpunkt 12b aufweist, die beide mit dem Stoffhaltebügel verbunden sind. Auf Grund der drehfesten Kopplung zwischen Grundplatte 10 und Verschwenkhebel 12 führen das Verbindungsglied 12a und der Gelenkpunkt 12b bei der Überführungsbewegung zwischen Schließ- und Ablagestellung eine kreisförmige Bewegung um die fahrzeugfeste Drehachse 11 der Grundplatte 10 aus. Diese kreisförmige Bewegung entspricht der Teilkreisbahn, mit der der Stoffhaltebügel von Schließ- in Ablagestellung bzw. umgekehrt überführt wird.

In einer alternativen Ausführung kann es auch zweckmäßig sein, die Bewegung der Verstellkinematik 9 über ein eigenständiges, vom Faltverdeck unabhängiges Stellelement zusteuern. Die Koordination der Bewegungen des Faltverdecks und der den Stoffhaltebügel beaufschlagenden Verstellkinematik wird in diesem Fall durch eine abgestimmte Stellbewegung der jeweiligen Stellelemente vollzogen.

Wie den Fig. 3 bis 7 zu entnehmen, ist der Hebel 13 als Kulissenhebel ausgeführt, der im Bereich seines vorderen, der Grundplatte 10 zugewandten Abschnittes 13b eine Kulisse 17 aufweist, welche insbesondere als Langloch ausgeführt ist. Der zweite Hebel 14 ist als Steuerhebel ausgebildet und ist über einen Gelenkpunkt 14b gelenkig mit der Grundplatte 10 verbunden.

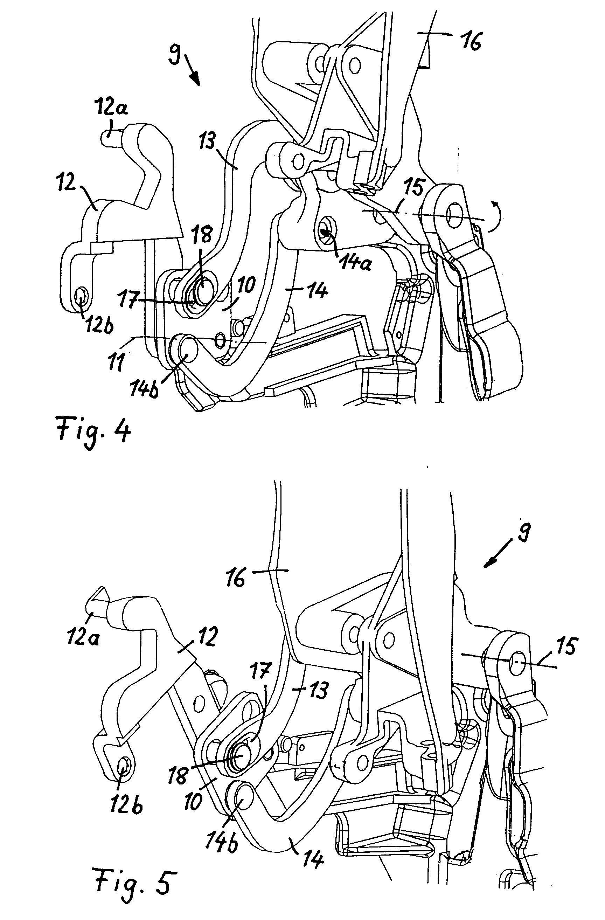

In der Kulisse 17 des Kulissenhebels 13 ist ein fest mit der Grundplatte 10 verbundener Bolzen 18 geführt, der bei der Überführung der Stellkinematik 9 zwischen Schließ- und Ablagestellung in der Kulisse 17 entlang gleiten kann und außerdem eine Verdrehung des Kulissenhebels 13 gegenüber der Grundplatte 10 gestattet. Die insbesondere translatorische Verschiebung des Bolzens 18 in der Kulisse 17 des Kulissenhebels 13 ist erforderlich, um eine Übertotpunktlage der Verstellkinematik zu überwinden. Diese Übertotpunktlage, die in Fig. 5 dargestellt ist und sich durch eine Anschlagposition des Bolzens 18 in der Kulisse 17 im Bereich der dem äußeren Abschnitt 18b des Kulissenhebels zugewandten Stirnseite auszeichnet, kommt dadurch zu Stande, dass bei der Überführung von Schließ- in Ablagestellung die Gelenkpunkte 13a und 14a der beiden Hebel 13 und 14 am Dachrahmen 16 in einer Verbindungslinie 19 mit dem Bolzen 18 in der Kulisse 17 liegen. Die Verbindungslinie 19 ist in den Fig. 2 und 7 eingezeichnet. Bei der Überführung der Verstellkinematik von der in Fig. 2 dargestellten Schließstellung in die in Fig. 7 dargestellte Ablagestellung wird der Bolzen 18 in der Kulisse 17 des Kulissenhebels 13 aus einer Position unterhalb der Verbindungslinie 19 in eine Position auf bzw. oberhalb der Verbindungslinie und im weiteren Verlauf wieder in eine Position unterhalb der Verbindungslinie verstellt. Sowohl in Schließstellung als auch in Ablagestellung befindet sich der Bolzen 18 in einer stirnseitigen Anschlagstellung in der Kulisse 17, welche der der Übertotpunktlage gemäß Fig. 5 dargestellten, dem freien Ende des Kulissenhebels 13 benachbarten Position gegenüber liegt.

## Patentansprüche

1. Verstellbares Fahrzeugdach, das ein zwischen einer Schließstellung und einer Ablagestellung verstellbares Faltverdeck mit einem Verdeckgestänge und einem Verdeck-Bezugstoff aufweist, mit einem Stoffhaltebügel (1), der in Schließstellung (4) des Faltverdecks auf einem rückwärtigen, karosserieseitigen Bauteil aufliegt und den Verdeck-Bezugstoff mit Spannung beaufschlagt und der mittels einer Verstellkinematik (9) in einen Ablageraum (2) absenkbar ist, wobei der Stoffhaltebügel (1) im Anlenkpunkt zur Verstellkinematik (9) schwenkbar gelagert ist und bei der Überführung in den Ablageraum (2) eine teilkreisförmige Bewegung ausführt,
**dadurch gekennzeichnet,**
dass die Verstellkinematik (9) als Viergelenk-Kinematik mit einer um eine fahrzeugfeste Drehachse (15) schwenkbar gelagerten und mit dem Stoffhaltebügel (1) verbundenen Grundplatte (10) und zwei an der Grundplatte (10) gelenkig angreifenden Hebeln (13, 14) ausgebildet ist und die beiden Hebel (13, 14) bei der Überführung zwischen Schließ- und Ablagestellung (4, 5) eine Übertotpunktlage durchschreiten.

2. Fahrzeugdach nach Anspruch 1,
**dadurch gekennzeichnet,**
dass einer der Hebel als Kulissenhebel (13) ausgebildet ist, dessen eines Ende eine Kulisse (17) aufweist, in der ein Bolzen (18) der Grundplatte (10) geführt ist, wobei der Bolzen (18) in der Kulisse (17) entgegengesetzte Positionen in der Übertotpunktlage und außerhalb der Übertotpunktlage einnimmt.

3. Fahrzeugdach nach einem der Ansprüche 1 bis 2,
**dadurch gekennzeichnet**,
dass die der Grundplatte (10) abgewandten Enden der Hebel (13, 14) mit einem verstellbaren Bügel des Fahrzeugdaches verbunden sind.

4. Fahrzeugdach nach Anspruch 3,
**dadurch gekennzeichnet**,
dass der verstellbare Bügel des Fahrzeugdaches um eine fahrzeugfeste Drehachse (15) verschwenkbar gelagert ist.

5. Fahrzeugdach nach Anspruch 3 oder 4,
**dadurch gekennzeichnet**,
dass der verstellbare Bügel des Fahrzeugdaches ein Dachrahmen (16) ist.

6. Fanrzeugdach nach einem der Ansprüche 1 bis 5,
**dadurch gekennzeichnet**,
dass der Stoffhaltebügel (1) um eine Querachse quer zur Fahrzeuglängsachse verschwenkbar gelagert ist.
